# EUROPEAN PATENT SPECIFICATION

(11) **EP 2 922 121 B1**
(45) Date of publication and mention of the grant of the patent: **15.05.2019**
(21) Application number: 13855900.0
(22) Date of filing: 12.11.2013
(51) Int. Cl.: H01M 4/505, C01G 45/12

(54) **LITHIUM-MANGANATE-PARTICLE POWDER FOR USE IN NON-AQUEOUS ELECTROLYTE SECONDARY BATTERY, METHOD FOR PRODUCING SAME, AND NON-AQUEOUS ELECTROLYTE SECONDARY BATTERY**
LITHIUMMANGANATPARTIKELPULVER ZUR VERWENDUNG IN EINER SEKUNDÄRBATTERIE MIT NICHTWÄSSRIGEM ELEKTROLYTEN, VERFAHREN ZUR HERSTELLUNG DAVON UND SEKUNDÄRBATTERIE MIT NICHTWÄSSRIGEM ELEKTROLYT
POUDRE DE PARTICULES DE MANGANATE DE LITHIUM DESTINÉE À ÊTRE UTILISÉE DANS UNE BATTERIE SECONDAIRE À ÉLECTROLYTE NON AQUEUX, PROCÉDÉ DE FABRICATION DE CELLE-CI, ET BATTERIE SECONDAIRE À ÉLECTROLYTE NON AQUEUX

(30) Priority: 13.11.2012 JP 2012249676
(43) Date of publication of application: 23.09.2015
(73) Proprietor: TODA KOGYO CORP., Hiroshima 732-0828 (JP)
(72) Inventor: KOGA, Kazumichi, Onoda-shi Yamaguchi 756-0847 (JP); MASUKUNI, Hiroaki, Onoda-shi Yamaguchi 756-0847 (JP); KAJIYAMA, Akihisa, Onoda-shi Yamaguchi 756-0847 (JP); UEGAMI, Masayuki, Onoda-shi Yamaguchi 756-0847 (JP); MATSUMOTO, Kazutoshi, Onoda-shi Yamaguchi 756-0847 (JP)
(74) Representative: J A Kemp
(86) International application number: PCT/JP2013/080499
(87) International publication number: WO 2014/077231

(56) References cited:
- EP-A1- 2 157 640
- EP-A1- 2 214 233
- EP-A1- 2 330 079
- EP-A1- 2 333 878
- EP-A1- 2 381 515
- JP-A- H10 321 227
- JP-A- 2006 164 859
- JP-A- 2009 259 605
- JP-A- 2010 108 926
- JP-A- 2010 137 996
- JP-A- 2011 119 092

## Description

### TECHNICAL FIELD

The present invention relates to lithium manganate particles for non-aqueous electrolyte secondary batteries which are excellent in high-temperature storage characteristics and a process for producing the lithium manganate particles, and a non-aqueous electrolyte secondary battery.

### BACKGROUND ART

With the recent rapid development of portable and cordless electronic devices such as audio-visual (AV) devices and personal computers, there is an increasing demand for secondary batteries having a small size, a light weight and a high energy density as a power source for driving these electronic devices. Also, in consideration of global environments, electric cars and hybrid cars have been recently developed and put into practice, so that there is an increasing demand for lithium ion secondary batteries used in large size applications which have excellent storage characteristics. Under these circumstances, the high-energy lithium ion secondary batteries having advantages such as a high discharge voltage and a large discharge capacity have been noticed. In particular, in order to apply the lithium ion secondary batteries to electric tools, electric vehicles or the like in which rapid charge/discharge cycle characteristics are needed, it has been required that the lithium ion secondary batteries exhibit excellent rate characteristics.

Hitherto, as positive electrode active materials useful for high energy-type lithium ion secondary batteries exhibiting a 4 V-grade voltage, there are generally known LiMn₂O₄ having a spinel structure and LiMnO₂, LiCoO₂, LiCo₁₋ₓNiₓO₂ and LiNiO₂ having a rock-salt type structure, or the like. Among these active materials, LiCoO₂ is more excellent because of a high voltage and a high capacity thereof, but has the problems such as a high production cost due to a less amount of a cobalt raw material supplied, and a poor environmental safety upon disposal of cells obtained therefrom. In consequence, there have now been made earnest studies on lithium manganate particles with a spinel type structure (basic composition: LiMn₂O₄; this is similarly applied to the subsequent descriptions) which are produced by using, as a raw material, manganese having a large supply amount, a low cost and a good environmental compatibility.

As is known in the art, the lithium manganate particles may be obtained by mixing a manganese compound and a lithium compound at a predetermined ratio and then calcining the resulting mixture at a temperature of 700 to 1000°C.

When using the lithium manganate particles as a positive electrode active material for lithium ion secondary batteries, the resulting cell has a high voltage and a high energy density, but tends to be deteriorated in charge/discharge cycle characteristics and high-temperature storage characteristics. The reason therefor is considered to be that when charge/discharge cycles are repeated, the crystal lattice is expanded and contracted owing to desorption and insertion behavior of lithium ions in the crystal structure to cause change in volume of the crystal, which results in occurrence of breakage of the crystal lattice or dissolution of manganese in an electrolyte solution.

At present, in the lithium ion secondary batteries using lithium manganate particles, it has been strongly required to suppress deterioration in charge/discharge capacity due to repeated charge/discharge cycles as well as deterioration in high-temperature storage characteristics.

In order to improve these characteristics, it is required that the positive electrode active material used therein which comprises the lithium manganate particles has an excellent packing property and an appropriate size, and further is free from elution of manganese therefrom. To meet the requirements, there have been proposed the method of suitably controlling a particle size and a particle size distribution of the lithium manganate particles; the method of obtaining the lithium manganate particles having a high crystallinity by controlling a calcination temperature thereof; the method of adding different kinds of elements to the lithium manganate particles to strengthen a bonding force of the crystals; the method of subjecting the lithium manganate particles to surface treatment or adding additives thereto; or the like.

Conventionally, it is known that aluminum is incorporated in the lithium manganate particles (Patent literature 1). In addition, it is known that a sintering aid such as boron oxide, boric acid, lithium borate and ammonium borate is added upon production of lithium manganate to attain effects by addition of the sintering aid (Patent literature 2). Further, it is known that a content of sulfur in lithium manganate is reduced (Patent literature 3). Furthermore, there is known the method in which trimanganese tetraoxide is mixed with various different kinds of elements, and a lithium compound, and the resulting mixture is calcined to obtain lithium manganate (Patent Literature 4).

### CITATION LIST:

### PATENT LITERATURE

Patent literature 1: Japanese Patent Application Laid-Open (KOKAI) No. 2012-031064
Patent literature 2: Japanese Patent Application Laid-Open (KOKAI) No. 2009-224288
Patent literature 3: Japanese Patent Application Laid-Open (KOKAI) No. 2008-282804
Patent literature 4: Japanese Patent Application Laid-Open (KOKAI) No. 2005-289720

### SUMMARY OF INVENTION

### TECHNICAL PROBLEM

At present, it has been strongly required to provide lithium manganate particles having good high-temperature characteristics. However, the lithium manganate capable of fully satisfying the above requirement has not been obtained until now.

That is, even the technologies described in the above Patent literatures 1 to 4 have failed to improve high-temperature characteristics of the lithium manganate particles.

More specifically, in Patent Literature 1, a water suspension comprising EMD (electrolytic manganese dioxide) as well as a lithium compound and the other compound is sprayed and dried, and then calcined to obtain lithium manganate (LMO). However, it is considered that the lithium manganate of Patent Literature 1 tends to be hardly well-controlled in a primary particle diameter and an average secondary particle diameter thereof, and therefore tends to fail to exhibit an adequate pore diameter. As a result, it is considered that the lithium manganate of Patent Literature 1 tends to be deteriorated in high-temperature characteristics. In addition, in Patent Literature 1, the use of the spraying and drying method tends to cause increased costs, so that it is not possible to obtain inexpensive lithium manganate having a high stability.

In Patent Literature 2, there are described definitions concerning a primary particle diameter and a secondary particle diameter of lithium manganate. However, there are no description concerning a specific surface area and a pore diameter of the lithium manganate. Therefore, it is considered that only the technology of Patent Literature 2 fails to improve high-temperature characteristics of the lithium manganate.

In Patent Literature 3, there is described information concerning a pore diameter of lithium manganate which is however different from the scope of the present invention. Further, although aggregated particles similar to those of the present invention are described in Patent Literature 3, the lithium manganate of Patent Literature 3 has a large specific surface area, and it is therefore considered that the particles are incapable of withstanding high temperature conditions.

In Patent Literature 4, lithium manganate is synthesized by using trimanganese tetraoxide similarly to that of the present invention. However, as is apparent from the SEM image, the lithium manganate is monodisperse and has a larger primary particle size than that of the present invention. For this reason, it is considered that the lithium manganate fails to form necessary pores and aggregated particles, and therefore tends to be deteriorated in high-temperature characteristics.

In accordance with the present invention, there is provided lithium manganate particles for non-aqueous electrolyte secondary batteries which are excellent in high-temperature storage characteristics and a process for producing the lithium manganate particles, and a non-aqueous electrolyte secondary battery.

### SOLUTION TO PROBLEM

That is, according to the present invention, there are provided lithium manganate particles for non-aqueous electrolyte secondary batteries, having a spinel structure, an average primary particle diameter of 0.4 to 1.8 *µ*m and an average secondary particle diameter (D50) of 8 to 20 *µ*m, a ratio of the average secondary particle diameter (D50) to the average primary particle diameter (D50/average primary particle diameter) being in the range of 10 to 30, and pore diameters of pores in the lithium manganate particles as measured by a mercury intrusion porosimetry method being in the range of 100 to 500 nm,
wherein said lithium manganate particles have a composition represented by the chemical formula:

Li₁₊ₓMn_{2-x-y}M_{y}O₄

wherein M is at least one element selected from Al, Mg, Ti or Co,
x is 0.03 to 0.15, and
y is 0.05 to 0.20, and
wherein said lithium manganate particles comprise boron in an amount of 200 to 700 ppm based on the lithium manganate particles.

Preferably, the lithium manganate particles have a specific surface area of 0.20 to 0.7 m²/g as measured by BET method.

It is further preferred that the lithium manganite particles have a full width at half maximum (FWHM) on a (400) plane of the lithium manganate particles as measured by XRD (Cu-Kα ray) is in the range of 0.070 to 0.110°.

Further described herein are the lithium manganate particles of the invention, wherein a battery assembled with an electrode produced using the lithium manganate particles and a counter electrode formed of lithium, has a capacity restoration rate of not less than 96.5%.

In addition, according to the present invention, there is provided a process for producing the lithium manganate particles for non-aqueous electrolyte secondary batteries of the invention, comprising the steps of:
mixing trimanganese tetraoxide with at least a lithium compound; and
calcining the resulting mixture at a temperature of 800°C to 900°C in an oxidizing atmosphere,
wherein the trimanganese tetraoxide is in the form of aggregated particles having a crystallite size of 20 to 150 nm and an average secondary particle diameter (D50) of 7 to 18 µm.

Preferably, in the process, boron is added in the range of 200 to 700 ppm based on the lithium manganate particles.

Also provided is a positive electrode comprising the lithium manganate particles of the invention, a conducting agent and a binder.

Further, according to the present invention, there is provided a non-aqueous electrolyte secondary battery comprising at least the lithium manganate particles for non-aqueous electrolyte secondary batteries according to the invention.

Further provided is the use of the lithium manganate particles of the invention in a non-aqueous electrolyte secondary battery.

### BRIEF DESCRIPTION OF THE DRAWINGS

FIG. 1 is an SEM image of lithium manganate particles obtained in Example 1.
FIG. 2 is an SEM image of lithium manganate particles obtained in Comparative Example 1.
FIG. 3 is an FIB-SIM image of lithium manganate particles obtained in Example 1.
FIG. 4 is a graph of the pore size distribution of the lithium manganate particles obtained in Example 1 and Comparative Example 1.

### DESCRIPTION OF EMBODIMENTS

The construction of the present invention is described in more detail below.

The lithium manganate particles according to the present invention have a spinel structure and are in the form of a compound produced using trimanganese tetraoxide as a starting material which comprise at least Li and Mn.

The lithium manganate particles according to the present invention have an average primary particle diameter of 0.4 to 1.8 *µ*m and an average secondary particle diameter (D50) of 8 to 20 *µ*m. The ratio of the average secondary particle diameter (D50) to the average primary particle diameter (D50/average primary particle diameter) is controlled to lie within the range of 10 to 30. It is also important that when measuring pore diameters of pores in the lithium manganate particles by a mercury intrusion porosimetry method, the pore diameters are detected in the range of 100 to 500 nm.

When the average primary particle diameter of the lithium manganate particles is out of the above-specified range, the lithium manganate particles tend to have an excessively high reactivity with an electrolyte solution, and therefore become unstable. The average primary particle diameter of the lithium manganate particles is preferably 0.5 to 1.6 *µ*m.

When the average secondary particle diameter (D50) of the lithium manganate particles is less than 8 *µ*m, the lithium manganate particles tend to have an excessively high reactivity with an electrolyte solution and fail to exhibit high-temperature characteristics as required in the present invention. When the average secondary particle diameter (D50) of the lithium manganate particles is more than 20 *µ*m, the resistance inside an electrode formed of the lithium manganate particles tends to be increased, so that the resulting battery tends to be deterioration in operation. The average secondary particle diameter (D50) of the lithium manganate particles is preferably 10 to 19 *µ*m, and more preferably 10.5 to 18 *µ*m.

The ratio of the average secondary particle diameter (D50) to the average primary particle diameter (D50/average primary particle diameter) of the lithium manganate particles according to the present invention is in the range of 10 to 30. When the lithium manganate is synthesized such that the ratio lies within the above-specified range, the average secondary particle diameter (D50) of the lithium manganate particles becomes sufficiently large as compared to the average primary particle diameter thereof, so that it is possible to reduce a specific surface area of the lithium manganate particles to a sufficient extent. The ratio of the average secondary particle diameter (D50) to the average primary particle diameter of the lithium manganate particles is preferably 10 to 29.

The lithium manganate particles according to the present invention are characterized in that the pore diameters of pores in the lithium manganate particles are present in the range of 100 to 500 nm in a pore distribution thereof as measured by a mercury intrusion porosimetry method. In the present invention, it is considered that the pores which are present in the lithium manganate particles can impart a good liquid-retaining property to the lithium manganate particles. In the present invention, the pores having a pore diameter of 100 to 500 nm have a pore volume of not less than 0.0002 mL/g, i.e., the peak value of the pore distribution is present in the range of 100 to 500 nm in which the pore volume is not less than 0.0002 mL/g.

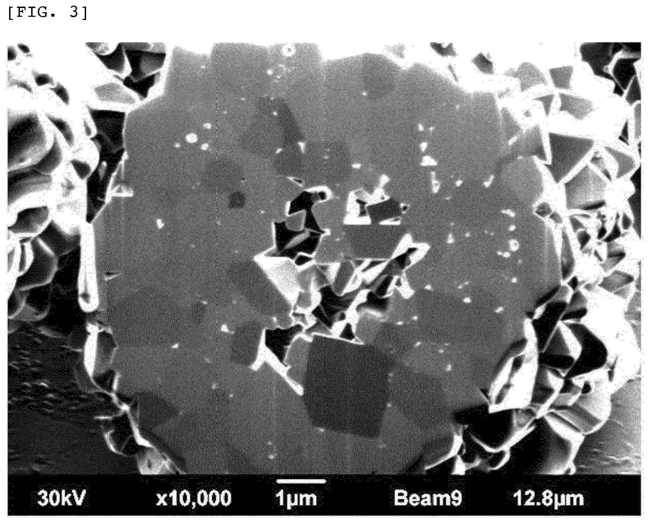

An important point of the lithium manganate particles according to the present invention resides in that the lithium manganate particles satisfy the above requirements. As understood from the FIB (focused ion beam)-SIM (scanning ion microscope) image shown in FIG. 3, it is also important that voids (pores) are observed in a central portion of the respective aggregated particles, or a grain boundary between the primary particles which are different in crystal orientation from each other is observed therein.

As a result of the large effects of the present invention such as an adequately small primary particle size and presence of gaps (voids or pores), it is considered that the lithium manganate particles of the present invention have an excellent liquid-retaining property, undergo facilitated insertion and desorption of Li ions, and are capable of damping and absorbing distortion owing to swelling and contraction upon charging and discharging of the battery. For this reason, it is considered that the lithium manganate particles of the present invention hardly suffer from occurrence of breakage of particles or crystals, so that elution of Mn from the lithium manganate particles are hardly caused and high-temperature characteristics thereof can be improved.

The specific surface area of the lithium manganate particles according to the present invention (as measured by BET specific surface area method) is preferably 0.20 to 0.70 m²/g. When the specific surface area of the lithium manganate particles is excessively small, the contact area of the lithium manganate particles with an electrolyte solution tens to be excessively small, so that the resulting lithium manganate particles tend to be deteriorated in discharge capacity. When the specific surface area of the lithium manganate particles is excessively large, the positive electrode active substance particles tend to suffer from excessively strong reaction with an electrolyte solution, and tend to be deteriorated in high-temperature characteristics. The specific surface area of the lithium manganate particles according to the present invention is more preferably 0.25 to 0.65 m²/g.

The FWHM (400) as a full width at half maximum on a (400) plane of the lithium manganate particles according to the present invention as measured by X-ray diffraction using a Cu-Ka ray is preferably in the range of 0.070 to 0.110°. When the FWHM (400) is more than 0.110°, crystals of the lithium manganate particles tend to be unstable, so that the battery characteristics tend to be deteriorated. When the FWHM (400) is less than 0.070°, the lithium manganate particles tend to have an excessively high crystallinity, so that there is such a fear that the lithium manganate particles are deteriorated in lithium conductivity and electron conductivity. The FWHM (400) of the lithium manganate particles is more preferably in the range of 0.073 to 0.105°, and still more preferably 0.075 to 0.102°.

The lithium manganate particles according to the present invention have a composition represented by the chemical formula: Li₁₊ₓMn_{2-x-y}M_{y}O₄. M in the chemical formula is a metal that Mn can be substituted therewith and is at least one element selected from the group consisting of Al, Mg, Ti and Co. In the chemical formula, x is 0.03 to 0.15, and y is 0.05 to 0.20.

When x is less than 0.03, the resulting particles have a high capacity, but tends to be considerably deteriorated in high-temperature characteristics. When x is more than 0.15, the resulting particles exhibit improved high-temperature characteristics, but tend to be considerably deteriorated in capacity or tend to cause increase in resistance owing to formation of Li-rich phase (such as Li₂MnO₃ phase) therein. The value of x is preferably 0.05 to 0.13.

When y is less than 0.05, it is not possible to attain sufficient effects. When y is more than 0.20, the resulting particles tend to suffer from large decrease in capacity and, therefore, tend to be unpractical. The value of y is preferably 0.05 to 0.15.

The lithium manganate particles according to the present invention comprise boron in an amount of 200 to 700 ppm based on the lithium manganate particles. When incorporating boron into the lithium manganate particles, primary particles thereof can be strongly aggregated together, so that the resulting lithium manganate particles can be enhanced in various properties such as high-temperature characteristics. The content of boron in the lithium manganate particles is preferably in the range of 250 to 670 ppm.

Next, the process for producing the lithium manganate particles according to the present invention is described.

The lithium manganate particles according to the present invention can be produced by mixing trimanganese tetraoxide in the form of aggregated particles, i.e., an aggregate of fine crystals, with at least a lithium compound, and then calcining the resulting mixture in an oxidative atmosphere at a temperature of 800°C to 900°C.

It is required that the trimanganese tetraoxide used in the present invention has a crystallite size of 20 to 150 nm. When the crystallite size of the trimanganese tetraoxide is out of the above-specified range, the resulting lithium manganate particles tend to have an excessively large primary particle diameter and therefore tend to be deteriorated in high-temperature characteristics. The crystallite size of the trimanganese tetraoxide is preferably 30 to 145 nm.

In addition, it is required that the trimanganese tetraoxide used in the present invention is in the form of aggregated particles having an average secondary particle diameter (D50) of 7 to 18 *µ*m. When using the trimanganese tetraoxide in the form of aggregated particles, it is considered that Li can be sufficiently diffused upon production of lithium manganate, so that it is possible to obtain the lithium manganate particles having a good quality such as a high crystallinity. When the average secondary particle diameter (D50) of the trimanganese tetraoxide is less than 7 *µ*m, a positive electrode obtained using the lithium manganate particles produced therefrom tends to have a large contact area with an electrolyte solution in a secondary battery assembled, so that the resulting lithium manganate particles tend to be deteriorated in high-temperature characteristics. When the average secondary particle diameter (D50) of the trimanganese tetraoxide is more than 18 *µ*m, the resulting lithium manganate particles tend to become crystallographically unstable and therefore tends to be deteriorated in high-temperature characteristics. The average secondary particle diameter (D50) of the trimanganese tetraoxide is preferably 8 to 17 *µ*m, and more preferably 8 to 16 *µ*m.

Examples of the lithium compound used in the present invention include lithium carbonate, lithium hydroxide, lithium acetate, lithium nitrate and lithium fluoride. Of these lithium compounds, preferred is lithium carbonate.

The compound other than the lithium compound which can be added to the lithium manganate particles means a compound of a metal with which Mn in Mn sites of the lithium manganate particles can be substituted. Examples of the preferred metal compound include Al compounds, Mg compounds, Ti compounds and Co compounds. In addition, one or more kinds of transition metal compounds may also be added to the lithium manganate particles. As a result, it is possible to introduce one or more kinds of substituting elements into the lithium manganate particles.

Further, in the present invention, a boron compound is preferably added upon production of the lithium manganate particles. When calcining the raw material mixture to which the boron compound is added, it is considered that there can be attained the effect of strengthening aggregation between primary particles of the lithium manganate particles, and adjusting sizes of the primary particles (i.e., controlling sizes of the primary particles into similar uniform primary particle diameters). The amount of boron added is preferably in the range of 200 to 700 ppm based on the lithium manganate particles.

Examples of the boron compound include H₃BO₃, B₂O₃, Li₂B₄O₇ and boric acid esters. Of these boron compounds, preferred is H₃BO₃.

It is suggested that after subjected to the calcining step of the present invention, the boron is present in the form of a compound with Li on a surface layer of the respective lithium manganate particles as produced. The compound of Li and boron which is formed in the process of the present invention is present in an amorphous state, and therefore it is not possible to detect the compound as a crystalline phase peak in X-fray diffraction thereof.

In the present invention, it is required that the mixture of the trimanganese tetraoxide with at least the Li compound is calcined at a temperature of 800 to 900°C. When the calcination temperature is lower than 800°C, the resulting lithium manganate particles tend to exhibit a low crystallinity and therefore tend to be deteriorated in high-temperature characteristics. When the calcination temperature is higher than 900°C, sintering between the lithium manganate particles tends to proceed excessively, so that defects such as oxygen deficiency tend to occur, so that the resulting lithium manganate particles also tend to be deteriorated in high-temperature characteristics. The calcination temperature is preferably 810 to 890°C.

Next, a positive electrode using the positive electrode active substance comprising the lithium manganate particles according to the present invention is described.

When producing the positive electrode comprising the lithium manganate particles according to the present invention, a conducting agent and a binder are added to and mixed with the positive electrode active material by an ordinary method. Examples of the preferred conducting agent include acetylene black, carbon black and graphite. Examples of the preferred binder include polytetrafluoroethylene and polyvinylidene fluoride.

The secondary battery produced by using the positive electrode comprising the lithium manganate particles according to the present invention as the positive electrode active substance is constituted of the above positive electrode, a negative electrode and an electrolyte.

Examples of a negative electrode active material which may be used in the negative electrode include metallic lithium, lithium/aluminum alloys, lithium/tin alloys, amorphous carbon, and graphite.

Also, as a solvent for the electrolyte solution, there may be used combination of ethylene carbonate (EC) and diethyl carbonate (DEC), as well as an organic solvent comprising at least one compound selected from the group consisting of carbonates such as propylene carbonate (PC) and dimethyl carbonate (DMC), and ethers such as dimethoxyethane.

Further, as the electrolyte, there may be used a solution prepared by dissolving, in addition to lithium phosphate hexafluoride (LiPF₆), at least one lithium salt selected from the group consisting of lithium perchlorate (ClLiO₄) and lithium borate tetrafluoride (LiuBF₄) in the above solvent.

The non-aqueous electrolyte secondary battery produced by using the positive electrode comprising the lithium manganate particles according to the present invention preferably has a discharge capacity of 90 to 120 mAh/g at a voltage of 3.0 V or more as measured by the below-mentioned evaluation method. When the discharge capacity of the battery is out of the above-specified range, the lithium manganate tends to become unstable.

Also, with respect to the high-temperature characteristics of the non-aqueous electrolyte secondary battery, the capacity restoration rate thereof as measured by subjecting the battery to 6-week high-temperature storage test by the below-mentioned method is preferably not less than 96.5%, and more preferably not less than 97.0%.

### <Effects>

The important point of the present invention resides in such a fact that the secondary battery produced by using the lithium manganate particles having a large ratio of an average secondary particle diameter to an average primary particle diameter and comprising pores having a pore diameter of 100 to 500 nm as a positive electrode active substance thereof is excellent in high-temperature characteristics.

It is considered by the present inventors that by increasing the ratio of an average secondary particle diameter to an average primary particle diameter of the lithium manganate particles, it is possible to reduce a specific surface area thereof, and by forming fine pores having a very small pore diameter in the lithium manganate particles, it is possible to impart a liquid-retaining property to the pores, and damper and absorb distortion owing to swelling and contraction upon charging and discharging of the battery. Further, it is considered that by incorporating the boron compound into the lithium manganate particles, there can be attained the effect of suppressing side reactions with an electrolyte solution.

It is considered that the lithium manganate particles according to the present invention are capable of exhibiting the above two effects and therefore providing a secondary battery having excellent high-temperature characteristics.

### EXAMPLES

Typical examples of the present invention are described in more detail below.

The average primary particle diameter of the particles was determined as follows. That is, the particles were observed using a scanning electron microscope "SEM-EDX" equipped with an energy disperse type X-ray analyzer (manufactured by Hitachi High-Technologies Corp.) to measure particle diameters thereof, and an average value of the measured particle diameters was read out from a SEM image thereof.

The average secondary particle diameter (D50) of the particles was a volume-average particle diameter as measured by a wet laser method using a laser type particle size distribution measuring apparatus "MICROTRACK HRA" manufactured by Nikkiso Co., Ltd.

The specific surface area was determined by subjecting a sample to drying and deaeration at 120°C for 45 min in a nitrogen gas, and then measuring a specific surface area of the sample by a BET method using "MONOSORB" manufactured by Yuasa Ionics Inc.

The information concerning X-ray diffraction of a sample (such as crystallite size and full width at half maximum) was measured by "SmartLab" (radiation source: Cu-Kα) manufactured by Rigaku Co., Ltd. The measuring condition was 0.02° step scanning (holding time: 1.0 sec) at 2θ/θ of 10 to 90°.

The compositional amounts of the particles were determined in the following manner. That is, 0.2 g of a sample was dissolved under heating in 25 mL of a 20% hydrochloric acid solution. The resulting solution was cooled and then charged into a 100 mL measuring flask together with pure water to prepare a sample solution. The resulting sample solution was subjected to the measurement using ICAP "SPS-4000" manufactured by Seiko Denshi Kogyo Co., Ltd., to quantitatively determine amounts of the respective elements therein.

The pore distribution was determined as follows. That is, the particles were subjected to drying pretreatment at 107°C for 4 hr using "AutoPore IV 9520" manufactured by Micromeritics Instrument Corp., by a mercury intrusion porosimetry method.

The lithium manganate particles according to the present invention were subjected to evaluation of battery characteristics using a 2032 size coin cell.

The coin cell used for the evaluation of battery characteristics was prepared as follows. That is, 92% by weight of lithium manganate particles as positive electrode active substance particles, 2.5% by weight of acetylene black and 2.5% by weight of a graphite both serving as a conducting material, and 3% by weight of polyvinylidene fluoride dissolved in N-methyl pyrrolidone as a binder, were mixed with each other, and then the resulting mixture was applied onto an Al metal foil and then dried at 120°C. The thus obtained sheets were each blanked into 14 mmφ and then compression-bonded together under a pressure of 1.5 t/cm², and the resulting sheet was used as a positive electrode. A metallic lithium having a thickness of 500 *µ*m was blanked into 16 mmφ and used as a negative electrode, and 1 mol/L LiPF6 solution of mixed solvent comprising EC and DEC in a volume ratio of 1:2 was used as an electrolyte solution, thereby producing a coin cell of a 2032 type.

The capacity restoration rate indicating high-temperature characteristics was determined as follows. That is, the coin cell was charged at a current density of 0.1C until reaching 4.3 V (CC-CV), and then discharged until reaching 3.0 V (CC), and the discharge capacity at this time was represented by (a). Thereafter, the coin cell was charged at a current density of 0.1C until reaching 4.3 V (CC-CV), and the coin cell was dismounted from a charge/discharge device, and then allowed to stand in a thermostat at 60°C for 6 weeks. After the elapse of 6 weeks, the coin cell was taken out of the thermostat, and connected to the charge/discharge device. The coin cell was discharged at a current density of 0.1C until reaching 3.0 V (CC), and charged at a current density of 0.1C until reaching 4.3 V (CC-CV), and then discharged until reaching 3.0 V (CC), and the discharge capacity at this time was represented by (b). In the above case, the capacity restoration rate (%) was defined by (b/a x 100).

### Example 1:

Trimanganese tetraoxide having a crystallite size of 91 nm and an average secondary particle diameter of 10.2 *µ*m, lithium carbonate, aluminum hydroxide and boric acid were weighed in appropriate amounts and mixed in a ball mill, and the resulting mixture was calcined at 850°C. The thus obtained lithium manganate particles had a composition of Li_{1.07}Mn_{1.83}Al_{0.1}O₄, and comprised 487 ppm of boron. As a result of subjecting the resulting lithium manganate particles to X-ray diffraction to identify constitutional phases therein, the particles were constituted of a lithium manganate single phase, and no impurity phase was detected therein. Therefore, it was considered that amorphous substances of Li and B were formed in the particles.

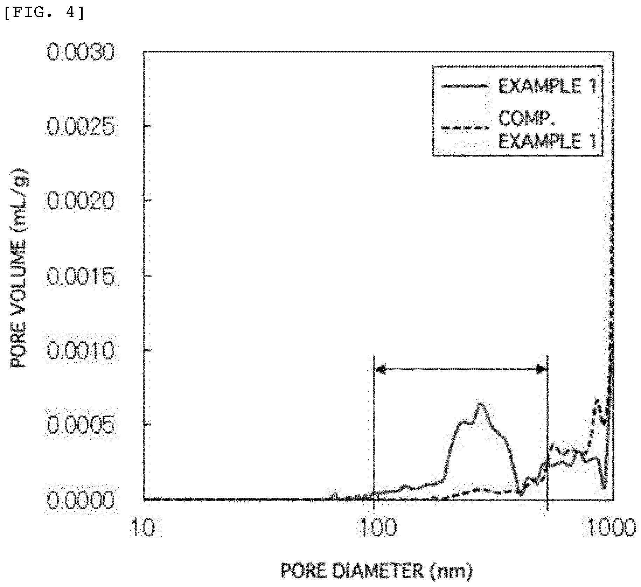

The lithium manganate had a specific surface area of 0.39 m²/g as measured by BET method, an average primary particle diameter of 1.3 *µ*m and an average secondary particle diameter (D50) of 15.3 *µ*m, and the ratio of D50 to an average primary particle diameter of the lithium manganate was 11.8. As a result of measuring a pore distribution of the lithium manganate particles by a mercury intrusion porosimetry method, the peak of pore diameters of the lithium manganate particles was observed at 270 nm, and the pore volume at the peak was 0.0006 mL/g. FIG. 4 shows a graph of the pore size distribution of the lithium manganate particles obtained in Example 1. Also, as a result of XRD measurement (CuKa ray), it was confirmed that FWHM (400) was 0.089°.

The lithium manganate particles were used as a positive electrode active substance to produce a coin cell. As a result, it was confirmed that the thus produced coin cell had an initial discharge capacity of 105 mAh/g and a capacity restoration rate of 97.9%.

### Examples 2 to 6:

The same procedure as in Example 1 was conducted except that the kind of trimanganese tetraoxide and the calcination temperature were variously changed, thereby obtaining lithium manganate particles.

The production conditions of the lithium manganate particles are shown in Table 1, and various properties of the resulting lithium manganate particles are shown in Table 2.

### Comparative Example 1:

Trimanganese tetraoxide having a crystallite size of 390 nm and an average secondary particle diameter of 4.3 *µ*m, lithium carbonate and aluminum hydroxide were weighed in appropriate amounts and mixed in a ball mill, and the resulting mixture was calcined at 960°C. The thus obtained lithium manganate particles had a composition of Li_{1.07}Mn_{1.83}Al_{0.1}O₄.

The production conditions of the lithium manganate particles are shown in Table 1, and various properties of the resulting lithium manganate particles are shown in Table 2. FIG. 4 shows a graph of the pore size distribution of the lithium manganate particles obtained in Comparative Example 1. From FIG. 4, it was confirmed that no peak of the pore diameters of the lithium manganate particles obtained in Comparative Example 1 was present in the range of 100 to 500 nm, i.e., substantially no pores were present in this range.

### Comparative Example 2:

Trimanganese tetraoxide having a crystallite size of 390 nm and an average secondary particle diameter of 4.2 *µ*m, lithium carbonate, aluminum hydroxide and boric acid were weighed in appropriate amounts and mixed in a ball mill, and the resulting mixture was calcined at 910°C. The thus obtained lithium manganate particles had a composition of Li_{1.07}Mn_{1.83}Al_{0.1}O₄, and an amorphous substance of Li and B was formed in a surface layer of the respective particles. The production conditions of the lithium manganate particles are shown in Table 1, and various properties of the resulting lithium manganate particles are shown in Table 2.

### Comparative Example 3:

Trimanganese tetraoxide having a crystallite size of 102 nm and an average secondary particle diameter of 9.2 *µ*m, lithium carbonate and aluminum hydroxide were weighed in appropriate amounts and mixed in a ball mill, and the resulting mixture was calcined at 810°C. The thus obtained lithium manganate particles had a composition of Li_{1.07}Mn_{1.83}Al_{0.1}O₄. The production conditions of the lithium manganate particles are shown in Table 1, and various properties of the resulting lithium manganate particles are shown in Table 2.

### Comparative Example 4:

Trimanganese tetraoxide having a crystallite size of 17 nm and an average secondary particle diameter of 9.3 *µ*m, lithium carbonate, aluminum hydroxide and boric acid were weighed in appropriate amounts and mixed in a ball mill, and the resulting mixture was calcined at 780°C. The thus obtained lithium manganate particles had a composition of Li_{1.07}Mn_{1.83}Al_{0.1}O₄, and an amorphous substance of Li and B was formed in a surface layer of the respective particles. The production conditions of the lithium manganate particles are shown in Table 1, and various properties of the resulting lithium manganate particles are shown in Table 2.

### Comparative Example 5:

Manganese dioxide having a crystallite size of 32 nm and an average secondary particle diameter of 9.5 *µ*m, lithium carbonate, aluminum hydroxide and cobalt oxide were weighed in appropriate amounts and mixed in a ball mill, and the resulting mixture was calcined at 880°C. The thus obtained lithium manganate particles had a composition of Li_{1.07}Mn_{1.87}Al_{0.03}Co_{0.03}O₄. The production conditions of the lithium manganate particles are shown in Table 1, and various properties of the resulting lithium manganate particles are shown in Table 2.

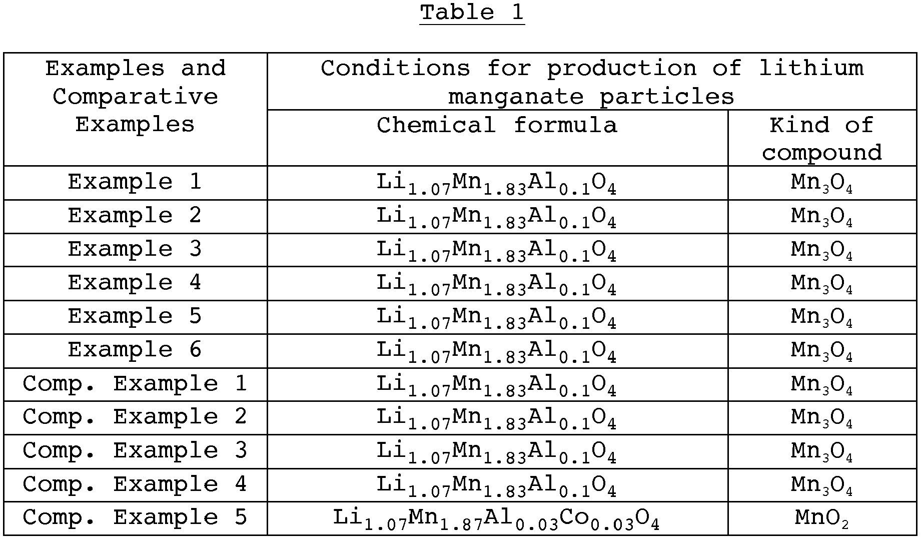

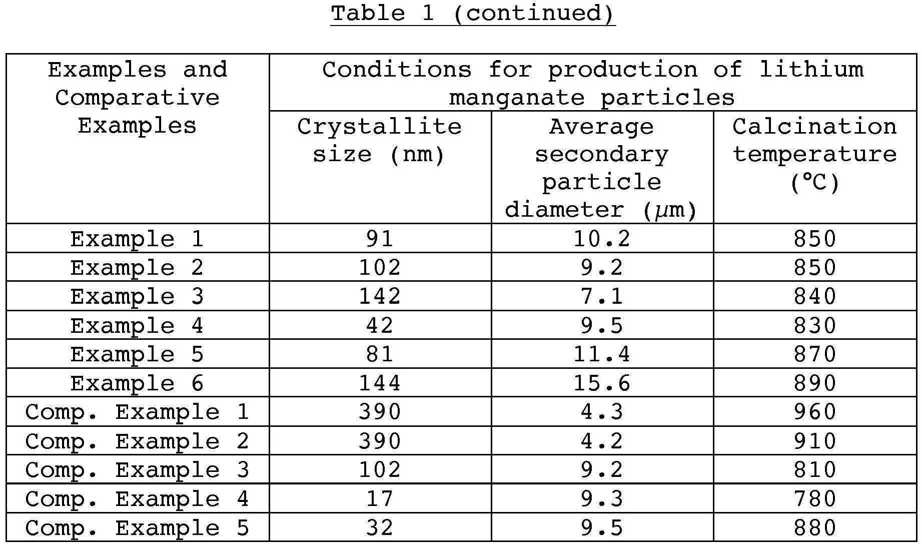

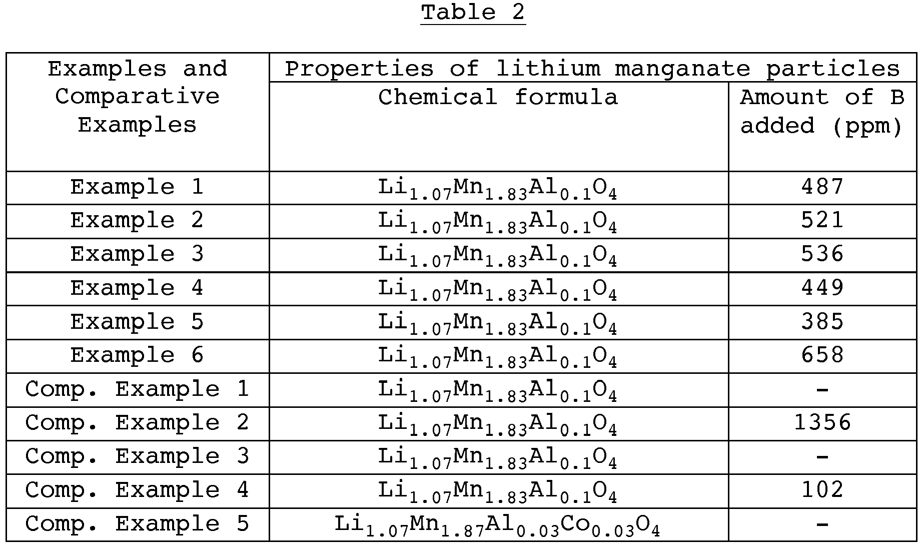

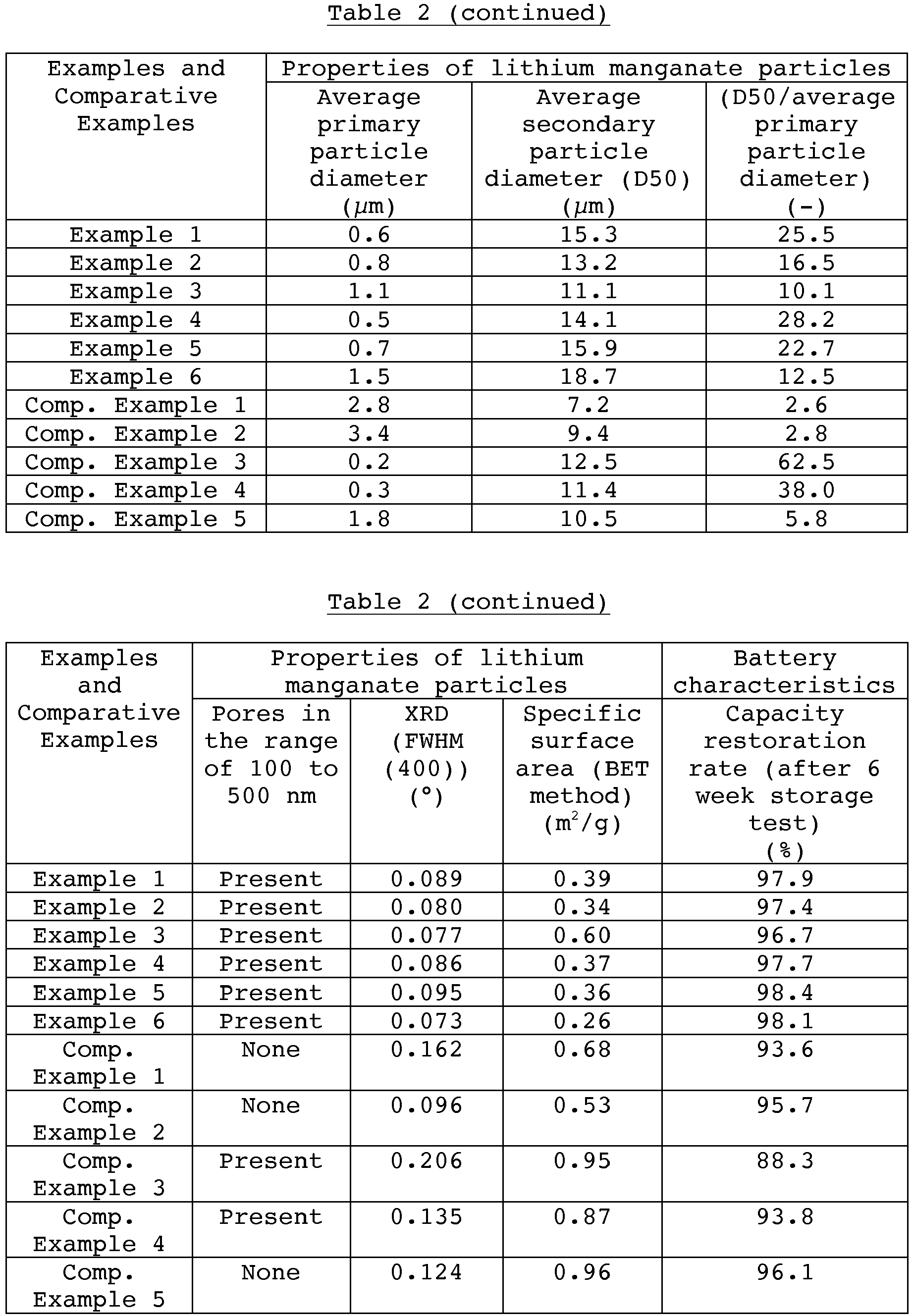

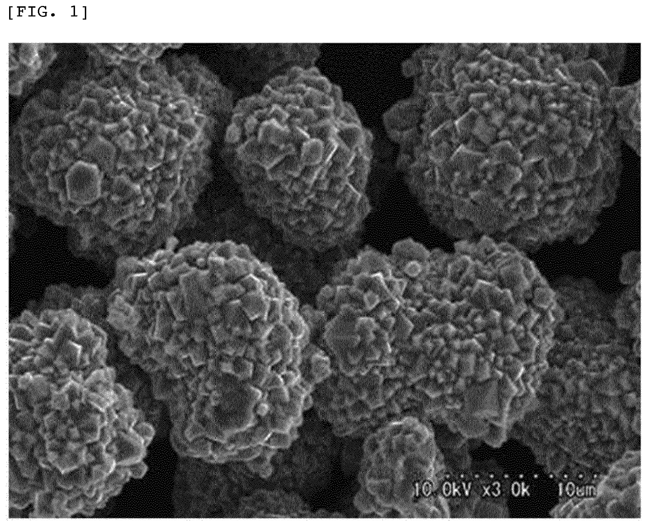

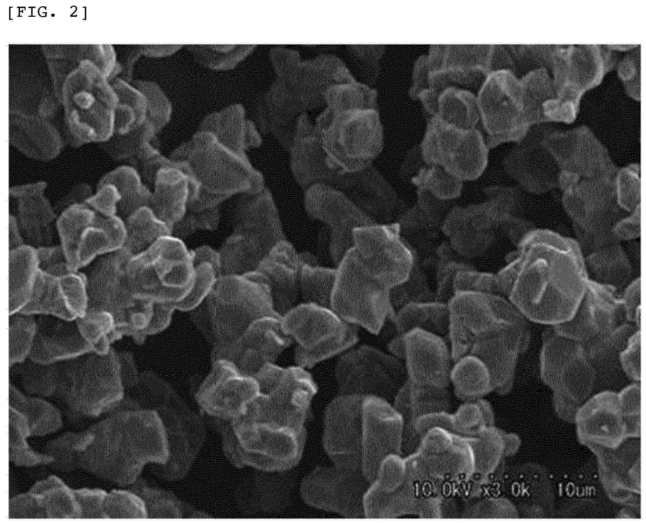

The SEM image of the lithium manganate particles obtained in Example 1 is shown in FIG. 1, whereas the SEM image of the lithium manganate particles obtained in Comparative Example 1 is shown in FIG. 2. As apparently recognized from FIGS. 1 and 2, it was confirmed that the secondary particles of the lithium manganate particles obtained in Example 1 had a particle shape similar to a spherical shape and therefore a large difference between primary and secondary particle diameters thereof. In addition, the lithium manganate particles obtained in Example 1 were in the form of aggregated particles, and therefore had a peculiar shape having a small specific surface area. Further, the lithium manganate particles obtained in Example 1 were characterized by having such a pore distribution as defined in the present invention. The section image (FIB-SIM image) of the lithium manganate particles obtained in Example 1 is shown in FIG. 3. As apparently recognized from FIG. 3, it was confirmed that voids (pores) were observed in a central portion of the respective aggregated particles of the lithium manganate particles, and there was observed the grain boundary between the primary particles that were different in crystal orientation from each other.

From the above results, it was confirmed that the particles according to the present invention had a peculiar shape and hardly suffered from side reactions with the electrolyte solution, and as a result, were useful as lithium manganate particles having excellent high-temperature characteristics.

### INDUSTRIAL APPLICABILITY

The lithium manganate particles according to the present invention are excellent in high-temperature storage characteristics, and therefore can be suitably used as positive electrode active substance particles for non-aqueous electrolyte secondary batteries.

## Claims

1. Lithium manganate particles for non-aqueous electrolyte secondary batteries, having a spinel structure, an average primary particle diameter of 0.4 to 1.8 µm and an average secondary particle diameter (D50) of 8 to 20 µm, a ratio of the average secondary particle diameter (D50) to the average primary particle diameter (D50/average primary particle diameter) being in the range of 10 to 30, and pore diameters of pores in the lithium manganate particles as measured by a mercury intrusion porosimetry method being in the range of 100 to 500 nm,
wherein said lithium manganate particles have a composition represented by the chemical formula:
Li₁₊ₓMn_{2-x-y}M_{y}O₄
wherein M is at least one element selected from Al, Mg, Ti or Co,
x is 0.03 to 0.15, and
y is 0.05 to 0.20, and
wherein said lithium manganate particles comprise boron in an amount of 200 to 700 ppm based on the lithium manganate particles.

2. The lithium manganate particles for non-aqueous electrolyte secondary batteries according to claim 1, wherein the lithium manganate particles have a specific surface area of 0.20 to 0.7 m²/g as measured by BET method.

3. The lithium manganate particles for non-aqueous electrolyte secondary batteries according to claim 1 or 2, wherein a full width at half maximum (FWHM) on a (400) plane of the lithium manganate particles as measured by XRD (Cu-Kα ray) is in the range of 0.070 to 0.110°.

4. A process for producing the lithium manganate particles for non-aqueous electrolyte secondary batteries as claimed in any one of claims 1 to 3, comprising the steps of:
mixing trimanganese tetraoxide with at least a lithium compound; and
calcining the resulting mixture at a temperature of 800°C to 900°C in an oxidizing atmosphere,
wherein the trimanganese tetraoxide is in the form of aggregated particles having a crystallite size of 20 to 150 nm and an average secondary particle diameter (D50) of 7 to 18 µm.

5. A process for producing the lithium manganate particles for non-aqueous electrolyte secondary batteries according to claim 4, wherein boron is added in the range of 200 to 700 ppm based on the lithium manganate particles.

6. A positive electrode comprising the lithium manganate particles according to any one of claims 1 to 3, a conducting agent and a binder.

7. A non-aqueous electrolyte secondary battery comprising at least the lithium manganate particles for non-aqueous electrolyte secondary batteries as claimed in any one of claims 1 to 3.

8. Use of the lithium manganate particles according to any one of claims 1 to 3 in a non-aqueous electrolyte secondary battery.

## Patentansprüche

1. Lithiummanganatpartikel für Akkumulatoren mit nichtwässrigem Elektrolyten, die eine Spinell-Struktur, einen durchschnittlichen Primärpartikeldurchmesser von 0,4 bis 1,8 µm und einen durchschnittlichen Sekundärpartikeldurchmesser (D50) von 8 bis 20 µm, ein Verhältnis des durchschnittlichen Sekundärpartikeldurchmessers (D50) zu dem durchschnittlichen Primärpartikeldurchmesser (D50/durchschnittlicher Primärpartikeldurchmesser) in dem Bereich von 10 bis 30 und Porendurchmesser der Poren in den Lithiummanganatpartikeln, gemessen durch ein Quecksilberintrusion-Porosimetrieverfahren im Bereich von 100 bis 500 nm, aufweisen,
wobei die Lithiummanganatpartikel eine Zusammensetzung aufweisen, die durch die chemische Formel:
Li₁₊ₓMn_{2-x-y}M_{y}O₄
dargestellt ist,
wobei M mindestens ein Element ausgewählt aus Al, Mg, Ti oder Co ist,
x 0,03 bis 0,15 ist, und
y 0,05 bis 0,20 ist, und
wobei die Lithiummanganatpartikel Bor in einer Menge von 200 bis 700 ppm bezogen auf die Lithiummanganatpartikel, umfassen.

2. Lithiummanganatpartikel für Akkumulatoren mit nichtwässrigem Elektrolyten nach Anspruch 1, wobei die Lithiummanganatpartikel eine spezifische Oberfläche von 0,20 bis 0,7 m²/g gemessen durch BET-Verfahren aufweisen.

3. Lithiummanganatpartikel für Akkumulatoren mit nichtwässrigem Elektrolyten nach Anspruch 1 oder 2, wobei eine Halbwertsbreite (full width at half maximum, FWHM) auf einer (400) Ebene der Lithiummanganatpartikel gemessen durch XRD (Cu-Kα Strahl) in dem Bereich von 0,070 bis 0,110° ist.

4. Verfahren zur Herstellung der Lithiummanganatpartikel für Akkumulatoren mit nichtwässrigem Elektrolyten, wie beansprucht in einem der Ansprüche 1 bis 3, umfassend die folgende Schritte:
Mischen von Trimangantetraoxid mit mindestens einer Lithiumverbindung; und
Kalzinieren des resultierenden Gemisches bei einer Temperatur von 800 °C bis 900 °C in einer oxidierenden Atmosphäre,
wobei das Trimangantetraoxid in Form von aggregierten Partikeln ist, die eine Kristallitgröße von 20 bis 150 nm und einem durchschnittlichen Sekundärpartikeldurchmesser (D50) von 7 bis 18 µm aufweisen.

5. Verfahren zur Herstellung der Lithiummanganatpartikel für Akkumulatoren mit nichtwässrigem Elektrolyten nach Anspruch 4, wobei Bor in dem Bereich von 200 bis 700 ppm bezogen auf die Lithiummanganatpartikel hinzugefügt wird.

6. Positive Elektrode, umfassend die Lithiummanganatpartikel nach einem der Ansprüche 1 bis 3, ein Leitmittel und ein Bindemittel.

7. Sekundärbatterie mit nichtwässrigem Elektrolyten, umfassend mindestens die Lithiummanganatpartikel für Akkumulatoren mit nichtwässrigem Elektrolyten wie beansprucht in einem der Ansprüche 1 bis 3.

8. Verwendung der Lithiummanganatpartikel nach einem der Ansprüche 1 bis 3 in einem Akkumulator mit nichtwässrigem Elektrolyten.

## Revendications

1. Particules de manganate de lithium pour des batteries secondaires à électrolyte non aqueux, présentant une structure de spinelle, un diamètre particulaire primaire moyen de 0,4 à 1,8 µm et un diamètre particulaire secondaire moyen (D50) de 8 à 20 µm, un rapport du diamètre particulaire secondaire moyen (D50) au diamètre particulaire primaire moyen (D50/diamètre particulaire primaire moyen) étant situé dans la plage de 10 à 30 et des diamètres de pores dans les particules de manganate de lithium tels que mesurés par un procédé de porosimétrie à intrusion de mercure étant situés dans la plage de 100 à 500 nm,
lesdites particules de manganate de lithium présentant une composition représentée par la formule chimique :
Li₁₊ₓMn_{2-x-y}M_{y}O₄
où M est au moins un élément choisi parmi Al, Mg, Ti ou Co,
x va de 0,03 à 0,15, et
y va de 0,05 à 0,20, et
lesdites particules de manganate de lithium comprenant du bore dans une quantité de 200 à 700 ppm en fonction des particules de manganate de lithium.

2. Particules de manganate de lithium pour des batteries secondaires à électrolyte non aqueux selon la revendication 1, les particules de manganate de lithium présentant une superficie spécifique de 0,20 à 0,7 m²/g telle que mesurée par le procédé BET.

3. Particules de manganate de lithium pour des batteries secondaires à électrolyte non aqueux selon la revendication 1 ou 2, dans lesquelles une largeur complète à mi-hauteur (FWHM) sur un plan (400) des particules de manganate de lithium telle que mesurées par XRD (rayon Cu-Kα) est située dans la plage de 0,070 à 0,110°.

4. Procédé de production des particules de manganate de lithium pour des batteries secondaires à électrolyte non aqueux telles que définies dans l'une quelconque des revendications 1 à 3, comprenant les étapes de :
mélange de tétraoxyde de trimanganèse avec au moins un composé de lithium ; et
calcination du mélange obtenu à une température de 800 °C à 900 °C dans une atmosphère d'oxydation,
le tétraoxyde de trimanganèse étant sous forme de particules agrégées présentant une taille de cristallite de 20 à 150 nm et un diamètre particulaire secondaire moyen (D50) de 7 à 18 µm.

5. Procédé de production des particules de manganate de lithium pour des batteries secondaires à électrolyte non aqueux selon la revendication 4, dans lequel le bore est ajouté dans la plage de 200 à 700 ppm en fonction des particules de manganate de lithium.

6. Électrode positive comprenant les particules de manganate de lithium selon l'une quelconque des revendications 1 à 3, un agent conducteur et un liant.

7. Batterie secondaire à électrolyte non aqueux comprenant au moins les particules de manganate de lithium pour des batteries secondaires à électrolyte non aqueux telles que définies dans l'une quelconque des revendications 1 à 3.

8. Utilisation des particules de manganate de lithium selon l'une quelconque des revendications 1 à 3 dans une batterie secondaire à électrolyte non aqueux.
